# EUROPEAN PATENT APPLICATION

(11) **EP 4 556 157 A1**
(43) Date of publication of application: **21.05.2025**
(21) Application number: 22950706.6
(22) Date of filing: 15.07.2022
(51) Int. Cl.: B23P 19/06, B23P 19/00

(54) **SCREW TIGHTENING APPARATUS**

(71) Applicant: Contemporary Amperex Technology Co., Limited, Ningde, Fujian 352100 (CN)
(72) Inventor: SUN, Zhiqiang, Ningde, Fujian 352100 (CN); GONG, Xueqing, Ningde, Fujian 352100 (CN); HUANG, Hua, Ningde, Fujian 352100 (CN); LI, Yang, Ningde, Fujian 352100 (CN); CHEN, Fanke, Ningde, Fujian 352100 (CN)
(74) Representative: Gong, Jinping
(86) International application number: PCT/CN2022/105983
(87) International publication number: WO 2024/011587

(57) **Abstract**

The present application provides a screw tightening device. The screw tightening device includes a fixing mechanism, a regulating mechanism, a screw feeding mechanism, a tightening mechanism, a first driving mechanism, and a second driving mechanism. The fixing mechanism extends in a first direction, and the fixing mechanism includes a first end and a second end arranged opposite to each other in the first direction. The regulating mechanism is arranged at the first end, and the regulating mechanism includes a regulating port. The screw feeding mechanism is arranged at the regulating mechanism and is configured to convey a screw to the regulating port. The tightening mechanism is arranged at the fixing mechanism, and the tightening mechanism is configured to drive the screw to rotate. The first driving mechanism is arranged at the second end, and is configured to be drivingly connected to the tightening mechanism and to drive the tightening mechanism to move in the first direction to the regulating port, such that the screw is fixed to the tightening mechanism. The second driving mechanism is arranged at the second end, and is configured to be drivingly connected to the tightening mechanism and to drive the tightening mechanism to move in the first direction to extend out of the regulating port. According to the present application, screw regulating and screw feeding can be effectively combined, and the production efficiency is improved.

## Description

### Technical Field

The present application relates to the technical field of fastener mounting, and more specifically, to a screw tightening device.

### Background Art

During assembly of an apparatus, it is necessary to connect all members in the apparatus and assemble the members as a whole. Screws are generally used to fasten and connect all the members in the apparatus, but the efficiency of tightening screws is low currently, leading to the low overall production efficiency.

Therefore, how to improve the screw tightening efficiency is an urgent problem.

### Summary of the Invention

The present invention provides a screw tightening device, which can improve the screw tightening efficiency.

In order to achieve the above objective, the present application provides a screw tightening device, which comprises a fixing mechanism, a regulating mechanism, a screw feeding mechanism, a tightening mechanism, a first driving mechanism, and a second driving mechanism, wherein the fixing mechanism extends in a first direction, and the fixing mechanism comprises a first end and a second end arranged opposite to each other in the first direction; the regulating mechanism is arranged at the first end, and the regulating mechanism comprises a regulating port; the screw feeding mechanism is arranged at the regulating mechanism and is configured to convey a screw to the regulating port; the tightening mechanism is arranged at the fixing mechanism, and the tightening mechanism is configured to drive the screw to rotate; the first driving mechanism is arranged at the second end, and is configured to be drivingly connected to the tightening mechanism and to drive the tightening mechanism to move in the first direction to the regulating port, such that the screw is fixedly arranged at the tightening mechanism; and the second driving mechanism is arranged at the second end, and is configured to be drivingly connected to the tightening mechanism and to drive the tightening mechanism to move in the first direction to extend out of the regulating port.

In this way, the first driving mechanism according to the present application can drive the tightening mechanism to come into contact with the screw at the regulating port and regulate the screw, so that a posture of the screw can be adjusted to make the screw perpendicular to a workpiece, facilitating the smooth implementation of the tightening process; and the second driving mechanism can drive the tightening mechanism to cause the screw to be perpendicular to the workpiece and screwed into the workpiece, thus completing the tightening process. The device can not only adjust the posture of the screw and improve the stability of the screwing process, but can also reduce the damage to the workpiece caused by improper screwing. By means of two-stage driving, the screw regulating and long-distance screw feeding can be effectively combined, and the overall structure of an apparatus is simplified. Moreover, the first driving mechanism and the second driving mechanism drive the tightening mechanism to move, and the production efficiency can thus be further improved.

In some implementations, the tightening mechanism comprises a sleeve assembly, a gun head assembly, and a driving assembly, wherein the gun head assembly is arranged in the sleeve assembly and can move in the first direction relative to the sleeve assembly, and the gun head assembly is configured to be fixedly connected to the screw; the driving assembly is arranged on the sleeve assembly, and the driving assembly is drivingly connected to the gun head assembly and is configured to drive the gun head assembly to rotate so as to cause the screw to rotate, wherein the first driving mechanism is configured to be drivingly connected to the sleeve assembly, so as to drive the sleeve assembly to cause the gun head assembly to move to the regulating port in the first direction; and the second driving mechanism is configured to be drivingly connected to the sleeve assembly, so as to drive the sleeve assembly to cause the gun head assembly to move in the first direction to extend out of the regulating port.

In this way, the tightening mechanism according to the present application has a relatively simple structural form, and the sequential driving of the first driving mechanism and the second driving mechanism makes it convenient to drive the sleeve assembly to come into contact with the workpiece.

In some implementations, the sleeve assembly comprises a first sleeve and a second sleeve that are sequentially arranged in the first direction, the first sleeve can penetrate the regulating mechanism, and the driving assembly is arranged on the second sleeve, wherein the gun head assembly is fitted inside the first sleeve and the second sleeve, and is connected to the first sleeve and the second sleeve; the first driving mechanism is configured to be connected to the second sleeve and to drive the second sleeve to move, so as to cause the gun head assembly and the first sleeve to move to the regulating port; and the second driving mechanism is configured to be connected to the second sleeve and to drive the second sleeve to move, so as to cause the gun head assembly and the first sleeve to move to extend out of the regulating port.

In this way, the first sleeve and the second sleeve according to the present application are arranged separately, which helps to assemble the gun head assembly into the sleeve assembly; and the first sleeve and the second sleeve can protect the gun head assembly, and when the screw tightening device is in contact with the workpiece, the first sleeve can abut against the workpiece to support the gun head assembly, thereby facilitating the gun head assembly to cause the screw to be screwed into the workpiece.

In some implementations, the fixing mechanism comprises a supporting assembly, a first moving assembly, and a second moving assembly connected to the first moving assembly, wherein the supporting assembly has the first end and the second end; the first moving assembly is movably connected to the supporting assembly, and the first moving assembly is fixedly connected to the first sleeve and located between the first end and the second end; the second moving assembly and the first moving assembly are sequentially arranged in the first direction; the second moving assembly is located between the first moving assembly and the second end; and the second moving assembly is movably connected to the supporting assembly and is fixedly connected to the second sleeve, wherein the first driving mechanism is configured to be drivingly connected to the second moving assembly and to drive the second moving assembly to move relative to the supporting assembly in the first direction, so as to cause the first sleeve to move to the regulating port; and the second driving mechanism is configured to be drivingly connected to the second moving assembly and to drive the second moving assembly to move relative to the supporting assembly in the first direction, so as to cause the first sleeve to move to extend out of the regulating port.

In this way, in the present application, with the assistance of the first moving assembly and the second moving assembly, it can be ensured that the first sleeve moves to the regulating port under the driving of the first driving mechanism, and that the first sleeve moves to extend out of the regulating port under the driving of the second driving mechanism.

In some implementations, the supporting assembly comprises a guide rail extending in the first direction, and the first moving assembly and the second moving assembly are both movably connected to the guide rail.

In this way, in the present application, by arranging the guide rail, the first moving assembly can move along the guide rail, the second moving assembly can move along the guide rail, and the guide rail can guide movements of the first moving assembly and the second moving assembly, so that the first moving assembly and the second moving assembly are not prone to deviation during the movements.

In some implementations, the first moving assembly and the second moving assembly are elastically connected to each other.

In this way, in the present application, due to the elastic connection between the first moving assembly and the second moving assembly, when the second moving assembly moves, compression and elastic deformation may occur between the first moving assembly and the second moving assembly. Due to the amount of compression between the first moving assembly and the second moving assembly, a thrust is given to the first moving assembly, and the thrust is transmitted to the first sleeve, so that it is possible to ensure that surfaces of the first sleeve and the workpiece are always kept in contact with each other, giving an auxiliary supporting force to the first sleeve, reducing the risk of the screw falling off due to the separation of the first sleeve from the workpiece, and ensuring the smooth screwing of the screw. In addition, since the first sleeve is subjected to an elastic force, a hook presses the screw tightly, which can further function to right the posture of the screw.

In some implementations, the fixing mechanism comprises a connecting member and a first elastic member, wherein one end of the connecting member is fixedly connected to the first moving assembly, and the other end of the connecting member is connected to the second moving assembly and can move in the first direction relative to the second moving assembly; and the first elastic member is fitted outside the connecting member, one end of the first elastic member is connected to one of the connecting member and the first moving assembly, and the other end of the first elastic member is connected to the second moving assembly, wherein the second driving mechanism is configured to drive the second moving assembly to move toward the first moving assembly, so as to compress the first elastic member.

In this way, the connecting member according to the present application can ensure the connection stability between the first moving assembly and the second moving assembly, and the connecting member can guide the movements of the first moving assembly and the second moving assembly to ensure that the first moving assembly and the second moving assembly move in the same direction.

In some implementations, the gun head assembly and the second sleeve are elastically connected to each other.

In this way, in the present application, due to the elastic connection between the gun head assembly and the second sleeve, when the second sleeve moves, compression and elastic deformation may occur between the second sleeve and the gun head assembly. When the tightening mechanism screws the screw into the workpiece, due to the compression between the gun head assembly and the second sleeve, a thrust is given to the gun head assembly, and the thrust pushes the gun head assembly to move toward the interior of the workpiece, so that the screw is screwed into the workpiece and the workpiece is fastened.

In some implementations, the tightening mechanism comprises a second elastic member, wherein the second elastic member is fitted outside the gun head assembly, one end of the second elastic member is fixedly connected to the gun head assembly, and the other end of the second elastic member abuts against the second sleeve; wherein the second driving mechanism is configured to drive the second moving assembly to move toward the first moving assembly, so as to cause the second sleeve to move to compress the second elastic member; and the second elastic member gives a thrust to the gun head assembly when the driving assembly is used to drive the gun head assembly to rotate.

In this way, the second elastic member according to the present application is fitted outside the gun head assembly, and when the second moving assembly moves toward the first moving assembly, the second sleeve moves relative to the gun head assembly; and the movement of the second sleeve causes the second sleeve to compress the second elastic member, so that the second elastic member is elastically deformed, and thus the second elastic member can provide a pressure for pushing the gun head assembly toward the interior of the workpiece, thereby achieving the automatic screw screwing process.

In some implementations, the first end further comprises a limiting assembly, wherein the limiting assembly is configured to abut against the first moving assembly when the tightening mechanism is used to drive the screw to rotate.

In this way, the limiting assembly according to the present application can reduce the risk of the first moving assembly being separated from the supporting assembly when moving toward the first end, and ensure the smooth implementation of the screw tightening process.

In some implementations, the limiting assembly comprises a limiting body and an extension portion, wherein the limiting body is configured to abut against the first moving assembly; and the extension portion is connected to the limiting body and protrudes relative to the limiting body, and the first sleeve can move in the first direction relative to the extension portion.

In this way, the limiting body according to the present invention abuts against the first moving assembly, and can limit the first moving assembly. The extension portion protruding from the limiting body can provide a supporting foundation for the first sleeve, facilitating the movement of the first sleeve.

In some implementations, the fixing mechanism comprises a first buffer member arranged on a surface of the limiting assembly that faces the first moving assembly.

In this way, in the present application, when the limiting assembly abuts against the first moving assembly, the first buffer member can provide a buffering function, to buffer an acting force of the first moving assembly on the limiting assembly, reducing the risk of damage to the first moving assembly and the limiting assembly, and ensuring the structural stability of the two assemblies.

In some implementations, the fixing mechanism comprises a second buffer member arranged on a surface of the first moving assembly that faces the limiting assembly.

In this way, in the present application, when the limiting assembly abuts against the first moving assembly, the second buffer member can provide a buffering function, to buffer an acting force of the first moving assembly on the limiting assembly, reducing the risk of damage to the first moving assembly and the limiting assembly, and ensuring the structural stability of the two assemblies.

In some implementations, the regulating mechanism comprises a regulating body and an opening and closing portion, wherein the regulating body is arranged at the first end, and the regulating body has the regulating port; and the opening and closing portion is rotatably connected to the regulating body and is configured to cover at least part of the regulating port, wherein when the tightening mechanism moves in the first direction, the opening and closing portion rotates relative to the regulating body to open the regulating port.

In this way, when the screw feeding mechanism according to the present application conveys the screw to the regulating port, the regulating port is in a closed state, and it is possible to reduce the risk of the screw falling from the regulating port. When the first driving mechanism drives the tightening mechanism to the regulating port, the tightening mechanism may be fixed to the screw. When the second driving mechanism drives the tightening mechanism to extend out of the regulating port, the opening and closing portion rotates to open the regulating port, so that the first sleeve of the tightening mechanism can extend out smoothly.

In some implementations, the screw feeding mechanism further comprises a vacuum suction assembly, wherein the vacuum suction assembly is configured to provide a negative pressure for the regulating port, so as to suck and fix the screw at the regulating port to the tightening mechanism.

In this way, the vacuum suction in the present application enables the screw to maintain the same posture before screwing into the workpiece, and the posture of the screw remains stable, so that it is possible to ensure that the gun head assembly of the tightening mechanism stably sucks the screw, and the screw can be screwed into the workpiece perpendicular to the surface of the workpiece.

In some implementations, the screw tightening device comprises a control mechanism, wherein the control mechanism is configured to control the first driving mechanism to drive the tightening mechanism to move in the first direction when it is confirmed that the screw is located at the regulating port. The production efficiency can be further improved by means of the automatic control of the control mechanism.

### Brief Description of the Drawings

In order to illustrate the technical solutions of the embodiments of the present application more clearly, the accompanying drawings required in the embodiments of the present application will be described briefly below. Obviously, the accompanying drawings described below are merely some embodiments of the present application, and for those of ordinary skill in the art, other accompanying drawings can also be obtained from these accompanying drawings without any creative efforts.
FIG. 1 is a front view of a screw tightening device according to some embodiments of the present application in a state;
FIG. 2 is a perspective view of the screw tightening device shown in FIG. 1;
FIG. 3 is a front view of a screw tightening device according to some embodiments of the present application in another state;
FIG. 4 is a perspective view of the screw tightening device shown in FIG. 3;
FIG. 5 is a perspective view of a screw tightening device according to some other embodiments of the present application; and
FIG. 6 is a schematic block diagram of a screw tightening device according to some embodiments of the present application.

The accompanying drawings are not drawn to actual scale.

Reference signs are as follows:
X. First direction;
1. Screw tightening device;
10. Fixing mechanism; 11. First end; 111. Limiting assembly; 1111. Limiting body; 1112. Extension portion;
12. Second end; 13. Supporting assembly; 131. Guide rail; 14. First moving assembly; 15. Second moving assembly; 16. Connecting member; 17. First elastic member;
20. Regulating mechanism; 21. Regulating port; 22. Regulating body; 23. Opening and closing portion;
30. Screw feeding mechanism;
40. Tightening mechanism; 41. Sleeve assembly; 411. First sleeve; 412. Second sleeve; 42. Gun head assembly; 43. Driving assembly;
50. First driving mechanism;
60. Second driving mechanism;
70. Control mechanism.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

"A plurality of" appearing in the present application means two or more (including two).

During assembly of an apparatus, it is necessary to connect all members in the apparatus and assemble the members as a whole. Screws are generally used to fasten and connect all the members in the apparatus, but the efficiency of tightening screws is low currently, leading to the low overall production efficiency. Taking an assembled battery as an example, the battery comprises battery cells and a case for receiving the battery cells. The case can prevent liquid or other foreign matters from affecting the charging or discharging of the battery cells. The case comprises a first case portion and a second case portion. It is necessary to tighten screws to connect the first case portion and the second case portion together, but the tightening efficiency is too low, resulting in relatively low overall production efficiency.

In view of this, the inventors have improved a screw tightening device and proposed a screw tightening device.

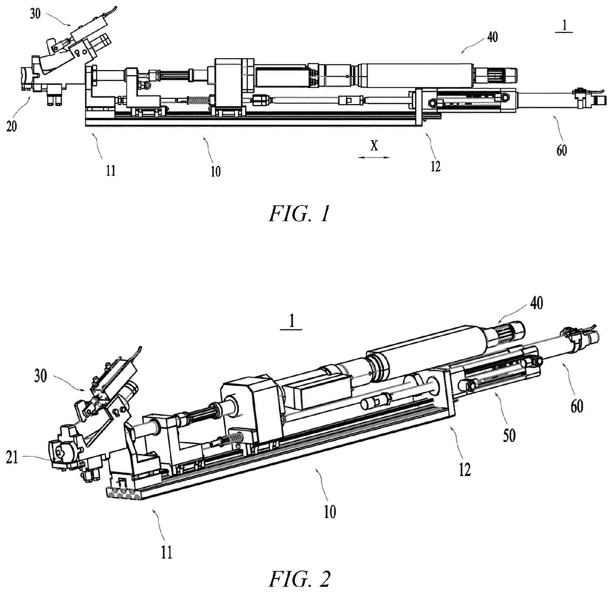

As shown in FIGS. 1 to 4, a screw tightening device 1 according to the present application comprises a fixing mechanism 10, a regulating mechanism 20, a screw feeding mechanism 30, a tightening mechanism 40, a first driving mechanism 50, and a second driving mechanism 60. The fixing mechanism 10 extends in a first direction X, and the fixing mechanism 10 comprises a first end 11 and a second end 12 arranged opposite to each other in the first direction X. The regulating mechanism 20 is arranged at the first end 11, and the regulating mechanism 20 comprises a regulating port 21. The screw feeding mechanism 30 is arranged at the regulating mechanism 20 and is configured to convey a screw to the regulating port 21. The tightening mechanism 40 is arranged at the fixing mechanism 10, and the tightening mechanism 40 is configured to drive the screw to rotate. The first driving mechanism 50 is arranged at the second end 12, and is configured to be drivingly connected to the tightening mechanism 40 and to drive the tightening mechanism 40 to move in the first direction X to the regulating port 21, such that the screw is fixedly arranged at the tightening mechanism 40. The second driving mechanism 60 is arranged at the second end 12, and is configured to be drivingly connected to the tightening mechanism 40 and to drive the tightening mechanism 40 to move in the first direction X to extend out of the regulating port 21.

As a mounting foundation, the fixing mechanism 10 can provide support for other members of the screw tightening device 1, such as the regulating mechanism 20, the first driving mechanism 50, and the second driving mechanism 60. The fixing mechanism 10 has various structural forms, for example, the fixing mechanism 10 may be of a plate-like structure, and certainly the fixing mechanism 10 may also be of a columnar structure. The entire fixing mechanism 10 may extend in the first direction X to provide a supporting foundation for the movement of the tightening mechanism 40.

The screw feeding mechanism 30 is configured to receive a screw and convey the screw to a preset position such as the regulating port 21. In some implementations, the screw feeding mechanism 30 may comprise a screw feeding air cylinder and a screw feeding tube. The screw feeding air cylinder can convey the screw to the regulating port 21 through the screw feeding tube.

The regulating mechanism 20 may be configured to receive the screw conveyed by the screw feeding mechanism 30, and may correct a posture of the screw at the regulating mechanism 20. The posture of the screw refers to a relative position of the screw to the regulating port 21. For example, if the screw is perpendicular to the regulating port 21, it may be considered that the posture of the screw is correct, which helps to fix the screw to the tightening mechanism 40. If the screw forms an acute angle with the regulating port 21, it may be considered that the posture of the screw is incorrect and needs to be corrected. In the present application, the posture of the screw may be corrected with a screw feeding manner of the screw feeding mechanism 30. For example, the screw may be conveyed by means of vacuum suction or blowing, so as to ensure the posture of the screw to a certain extent.

The tightening mechanism 40 is configured to screw the screw into a workpiece. The tightening process of the screw comprises the following stages: entry of a thread into a hole: the screw starts screwing after being aligned with an internal thread of the workpiece; initial screwing: after the thread enters the hole, the internal thread and the external thread move toward each other in opposite directions (for example, the inner threaded hole of the workpiece does not move but the screw rotates); steady forward rotation: after the entry of the thread into the hole and the initial screwing both meet requirements, the rotation continues until a lower surface of a nut of the screw comes into contact with the surface of the workpiece; and pre-tightening stage: after the nut comes into contact with a flat surface of the workpiece, the nut continues to be tightened to meet requirements for an intended pre-tightening force.

The first driving mechanism 50 serves as a driving source, and the first driving mechanism 50 may be an air cylinder or an electric cylinder, etc.; and the second driving mechanism 60 serves as a driving source, and the second driving mechanism 60 may also be an air cylinder or an electric cylinder, etc. The first driving mechanism 50 may not be connected to the tightening mechanism 40, but only functions to push the tightening mechanism 40 to move. The second driving mechanism 60 may not be connected to the tightening mechanism 40, but only functions to push the tightening mechanism 40 to move. Certainly, the second driving mechanism 60 may also be connected to the tightening mechanism 40. After pushing the tightening mechanism 40 to move and completing the screw tightening process, the second driving mechanism 60 may also pull back the tightening mechanism 40, so that the tightening mechanism 40 is restored to prepare for the next tightening.

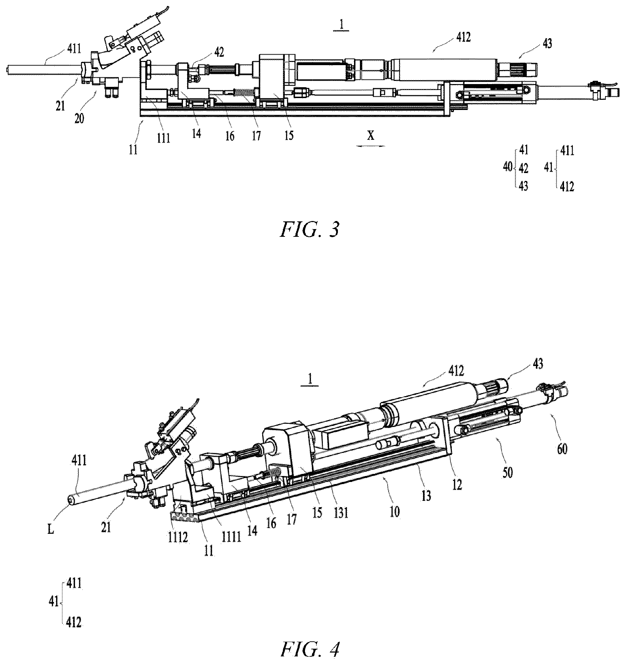

FIGS. 1 and 2 show a process in which a first driving mechanism 50 drives a tightening mechanism 40 to move; and FIGS. 3 and 4 show a process in which a second driving mechanism 60 drives a tightening mechanism 40 to move, and L shown in FIG. 4 represents a screw.

A process of tightening a screw in the present application is as follows: the screw feeding mechanism 30 conveys the screw L to the regulating port 21 of the regulating mechanism 20, and the first driving mechanism 50 drives the tightening mechanism 40 to move in the first direction X, such that the tightening mechanism 40 comes into contact with the screw L and can be fixedly connected to the screw L; during the process in which the first driving mechanism 50 drives the tightening mechanism 40 to come into contact with the screw L, the screw L can be regulated, that is, the posture of the screw L is righted, so that the screw L can be perpendicular to the surface of the workpiece, which is conducive to the tightening process of the screw L; then the second driving mechanism 60 drives the tightening mechanism 40 to continue to move in the first direction X, such that a part of the tightening mechanism 40 protrudes from the regulating port 21, that is, approaches the workpiece until the tightening mechanism 40 comes into contact with the workpiece, and the screw L is aligned with the inner threaded hole of the workpiece; and then the tightening mechanism 40 drives the screw L to rotate, so as to screw the screw L into the workpiece and complete the tightening process of the screw L.

In the screw tightening device 1 according to an embodiment of the present application, the first driving mechanism 50 can drive the tightening mechanism 40 to come into contact with the screw at the regulating port 21 and regulate the screw, so that a posture of the screw can be adjusted to make the screw perpendicular to a workpiece, facilitating the smooth implementation of the tightening process; and the second driving mechanism 60 can drive the tightening mechanism 40 to cause the screw to be perpendicular to the workpiece and screwed into the workpiece, thus completing the tightening process. The device can not only adjust the posture of the screw and improve the stability of the screwing process, but can also reduce the damage to the workpiece caused by improper screwing. By means of two-stage driving, the screw regulating and long-distance screw feeding can be effectively combined, and the overall structure of an apparatus is simplified. Moreover, the first driving mechanism 50 and the second driving mechanism 60 drive the tightening mechanism 40 to move, and the production efficiency can thus be further improved.

Still referring to FIGS. 1 to 4, in some implementations, the tightening mechanism 40 comprises a sleeve assembly 41, a gun head assembly 42, and a driving assembly 43. The sleeve assembly 41 is configured to be drivingly connected to the first driving mechanism 50 and to be drivingly connected to the second driving mechanism 60, and the sleeve assembly 41 is movable relative to the first direction X. The gun head assembly 42 is arranged in the sleeve assembly 41 and can move in the first direction X relative to the sleeve assembly 41, and the gun head assembly 42 is configured to be fixedly connected to the screw. The driving assembly 43 is arranged on the sleeve assembly 41, and the driving assembly 43 is drivingly connected to the gun head assembly 42 and is configured to drive the gun head assembly 42 to rotate so as to cause the screw to rotate.

The sleeve assembly 41 is fitted outside the gun head assembly 42, and can protect the gun head assembly 42. The gun head assembly 42 may be of a tubular structure extending in the first direction X, and an end portion of the gun head assembly close to the workpiece has an opening which may be configured to fix the screw. The driving assembly 43 may be an air cylinder or an electric cylinder, which may be configured to drive the gun head assembly 42 to rotate.

The first driving mechanism 50 is configured to be drivingly connected to the sleeve assembly 41, so as to drive the sleeve assembly 41 to cause the gun head assembly 42 to move in the first direction X to the regulating port 21, and the gun head assembly 42 can fix the screw, so as to cause the screw to move together. Then, the second driving mechanism 60 is configured to be drivingly connected to the sleeve assembly 41, so as to drive the sleeve assembly 41 to cause the gun head assembly 42 to move in the first direction X to extend out of the regulating port 21, such that the sleeve assembly 41 comes into contact with the workpiece. During this process, the gun head assembly 42 causes the screw to move together and the screw moves to the inner threaded hole of the workpiece. Then, the driving assembly 43 drives the gun head assembly 42 to rotate, so that the gun head assembly 42 causes the screw to rotate together so as to be screwed into the workpiece.

The tightening mechanism 40 according to the present application has a relatively simple structural form, and the sequential driving of the first driving mechanism 50 and the second driving mechanism 60 makes it convenient to drive the sleeve assembly 41 to come into contact with the workpiece.

Still referring to FIGS. 3 and 4, in some implementations, the sleeve assembly 41 comprises a first sleeve 411 and a second sleeve 412 that are sequentially arranged in the first direction X, the first sleeve 411 can penetrate the regulating mechanism 20, and the driving assembly 43 is arranged on the second sleeve 412. The gun head assembly 42 is fitted inside the first sleeve 411 and the second sleeve 412, and is connected to the first sleeve 411 and the second sleeve 412. The first driving mechanism 50 is configured to be connected to the second sleeve 412 and to drive the second sleeve 412 to move, so as to cause the gun head assembly 42 and the first sleeve 411 to move to the regulating port 21. The second driving mechanism 60 is configured to be connected to the second sleeve 412 and to drive the second sleeve 412 to move, so as to cause the gun head assembly 42 and the first sleeve 411 to move to extend out of the regulating port 21.

The first sleeve 411 and the second sleeve 412 are arranged separately, which helps to assemble the gun head assembly 42 into the sleeve assembly 41. The first sleeve 411 and the second sleeve 412 can protect the gun head assembly 42, and when the screw tightening device 1 is in contact with the workpiece, the first sleeve 411 can abut against the workpiece to support the gun head assembly 42, thereby facilitating the gun head assembly 42 to cause the screw to be screwed into the workpiece.

Still referring to FIGS. 3 and 4, in some implementations, the fixing mechanism 10 further comprises a supporting assembly 13, a first moving assembly 14, and a second moving assembly 15. The supporting assembly 13 has the first end 11 and the second end 12. The first moving assembly 14 is movably connected to the supporting assembly 13, the first moving assembly 14 is fixedly connected to the first sleeve 411, and the first moving assembly 14 is located between the first end 11 and the second end 12. The second moving assembly 15 is connected to the first moving assembly 14, and the second moving assembly 15 and the first moving assembly 14 are sequentially arranged in the first direction X; the second moving assembly 15 is located between the first moving assembly 14 and the second end 12; and the second moving assembly 15 is movably connected to the supporting assembly 13 and is fixedly connected to the second sleeve 412.

The first driving mechanism 50 is configured to be drivingly connected to the second moving assembly 15 and to drive the second moving assembly 15 to move relative to the supporting assembly 13 in the first direction X. In view of the fixed connection between the second moving assembly 15 and the second sleeve 412, the movement of the second moving assembly 15 causes the second sleeve 412 to move, and the movement of the second sleeve 412 causes the first sleeve 411, the gun head assembly 42 and the driving assembly 43 to move together, and the first sleeve 411 can move to the regulating port 21. Moreover, since the second moving assembly 15 is connected to the first moving assembly 14, the movement of the second moving assembly 15 causes the first moving assembly 14 to move. In view of the fixed connection between the first moving assembly 14 and the first sleeve 411, the movement of the first moving assembly 14 further assists in the movement of the first sleeve 411, thereby ensuring that the first sleeve 411 can move to the regulating port 21.

The second driving mechanism 60 is configured to be drivingly connected to the second moving assembly 15 and to drive the second moving assembly 15 to continue moving relative to the supporting assembly 13 in the first direction X. In view of the fixed connection between the second moving assembly 15 and the second sleeve 412, the movement of the second moving assembly 15 causes the second sleeve 412 to move, and the second sleeve 412 can cause the first sleeve 411, the gun head assembly 42 and the driving assembly 43 to move together, and the first sleeve 411 can continue moving from the regulating port 21 to extend out of the regulating port 21 until the first sleeve moves to the workpiece, so as to prepare for the subsequent screw screwing. Moreover, since the second moving assembly 15 is connected to the first moving assembly 14, the movement of the second moving assembly 15 causes the first moving assembly 14 to move. In view of the fixed connection between the first moving assembly 14 and the first sleeve 411, the movement of the first moving assembly 14 further assists in the movement of the first sleeve 411, thereby ensuring that the first sleeve 411 moves to the workpiece.

In the present application, with the assistance of the first moving assembly 14 and the second moving assembly 15, it can be ensured that the first sleeve 411 moves to the regulating port 21 under the driving of the first driving mechanism 50, and that the first sleeve 411 moves to extend out of the regulating port 21 under the driving of the second driving mechanism 60.

In some implementations, the supporting assembly 13 comprises a guide rail 131 extending in the first direction X, and the first moving assembly 14 and the second moving assembly 15 are both movably connected to the guide rail 131.

In the present application, by arranging the guide rail 131, the first moving assembly 14 can move along the guide rail 131, the second moving assembly 15 can move along the guide rail 131, and the guide rail 131 can guide movements of the first moving assembly 14 and the second moving assembly 15, so that the first moving assembly 14 and the second moving assembly 15 are not prone to deviation during the movements.

In some implementations, the first moving assembly 14 and the second moving assembly 15 may be in a rigid connection with each other, that is, a distance between the first moving assembly 14 and the second moving assembly 15 does not change substantially. This connection enables the moving process to be more stable.

Still referring to FIGS. 3 and 4, in some other implementations, the first moving assembly 14 and the second moving assembly 15 may be elastically connected to each other.

Due to the elastic connection between the first moving assembly 14 and the second moving assembly 15, when the second moving assembly 15 moves, compression and elastic deformation may occur between the first moving assembly 14 and the second moving assembly 15, that is, the distance between the first moving assembly 14 and the second moving assembly 15 may be shortened.

When the first driving mechanism 50 drives the second moving assembly 15 to move, there may be a slight amount of compression between the second moving assembly 15 and the first moving assembly 14.

When the second driving mechanism 60 drives the second moving assembly 15 to move and causes the first sleeve 411 to come into contact with the workpiece, as the second driving mechanism 60 may not have reached the stroke, the second driving mechanism 60 continues driving the first moving assembly 14 to move, and the first sleeve 411 will abut against the workpiece. According to the law of action and reaction forces of Newton's third law, the workpiece will give a thrust to the first sleeve 411, and the thrust will be transmitted to the first moving assembly 14. The first moving assembly 14 will give a thrust to the second moving assembly 15, and the second moving assembly 15 will also give a thrust to the first moving assembly 14 under the driving of the second driving mechanism 60. Therefore, the first moving assembly 14 and the second moving assembly 15 will be greatly compressed under the mutual thrust, and this compression will cause elastic deformation between the first moving assembly 14 and the second moving assembly 15. Certainly, when the second driving mechanism 60 drives the second moving assembly 15 to move and causes the first sleeve 411 to come into contact with the workpiece, the second driving mechanism 60 may have reached the stroke. When the second driving mechanism 60 initially drives the second moving assembly 15 to move, compression may also occur between the second moving assembly 15 and the first moving assembly 14, and therefore there is also an amount of compression between the second moving assembly and the first moving assembly.

After the second driving mechanism 60 reaches the stroke and no longer drives the second moving assembly 15 to move, the second moving assembly 15 substantially does not move toward the second driving mechanism 60 under the resistance of the second driving mechanism 60 to the second moving assembly 15. When the tightening mechanism 40 screws the screw into the workpiece, due to the amount of compression between the first moving assembly 14 and the second moving assembly 15, a thrust is given to the first moving assembly 14, and the thrust is transmitted to the first sleeve 411, so that it is possible to ensure that surfaces of the first sleeve 411 and the workpiece are always kept in contact with each other, giving an auxiliary supporting force to the first sleeve 411, reducing the risk of the screw falling off due to the separation of the first sleeve 411 from the workpiece, and ensuring the smooth screwing of the screw. In addition, since the first sleeve 411 is subjected to an elastic force, the first sleeve can keep pressing the screw tightly, which can further function to right the posture of the screw.

As some examples, the fixing mechanism 10 comprises a connecting member 16 and a first elastic member 17. One end of the connecting member 16 is fixedly connected to the first moving assembly 14, and the other end of the connecting member 16 is connected to the second moving assembly 15 and can move in the first direction X relative to the second moving assembly 15. The first elastic member 17 is fitted outside the connecting member 16, one end of the first elastic member 17 is connected to the connecting member 16, and the other end of the first elastic member 17 is connected to the second moving assembly 15. The second driving mechanism 60 is configured to drive the second moving assembly 15 to move toward the first moving assembly 14, so as to compress the first elastic member 17.

The connecting member 16 may be of a plate-like structure or a columnar structure, etc. The connecting member 16 can ensure the connection stability between the first moving assembly 14 and the second moving assembly 15, and the connecting member 16 can guide the movements of the first moving assembly 14 and the second moving assembly 15 to ensure that the first moving assembly 14 and the second moving assembly 15 move in the same direction.

The first elastic member 17 is fitted outside the connecting member 16. When the second moving assembly 15 moves toward the first moving assembly 14, the connecting member 16 moves relative to the second moving assembly 15, so that the distance between the first moving assembly 14 and the second moving assembly 15 becomes smaller. The movement of the second moving assembly 15 causes the second moving assembly 15 to compress the first elastic member 17, so that the first elastic member 17 is elastically deformed. As an example, the first elastic member 17 may be a spring, an elastic diaphragm, etc.

As some other examples, the fixing mechanism 10 comprises a connecting member 16 and a first elastic member 17, wherein one end of the connecting member 16 is fixedly connected to the first moving assembly 14, and the other end of the connecting member 16 is connected to the second moving assembly 15 and can move in the first direction X relative to the second moving assembly 15. The first elastic member 17 is fitted outside the connecting member 16, one end of the first elastic member 17 is connected to the first moving assembly 14, and the other end of the first elastic member 17 is connected to the second moving assembly 15. When the second moving assembly 15 moves toward the first moving assembly 14, the connecting member 16 moves relative to the second moving assembly 15, so that the distance between the first moving assembly 14 and the second moving assembly 15 becomes smaller. The movement of the second moving assembly 15 causes the second moving assembly 15 to compress the first elastic member 17, so that the first elastic member 17 is elastically deformed.

As yet some other examples, the first moving assembly 14 and the second moving assembly 15 may be directly connected to each other via the first elastic member 17.

In some implementations, the gun head assembly 42 and the second sleeve 412 are elastically connected to each other.

Due to the elastic connection between the gun head assembly 42 and the second sleeve 412, when the second sleeve 412 moves, compression and elastic deformation may occur between the second sleeve 412 and the gun head assembly 42.

When the first driving mechanism 50 drives the second moving assembly 15 to move, the second moving assembly 15 drives the second sleeve 412 to move, and there may be a slight amount of compression between the second sleeve 412 and the gun head assembly 42.

When the second driving mechanism 60 drives the second moving assembly 15 to move and causes the second sleeve 412 to move, and the second sleeve 412 causes the first sleeve 411 and the gun head assembly 42 to come into contact with the workpiece, as the second driving mechanism 60 may not have reached the stroke, the second driving mechanism 60 continues driving the second moving assembly 15 to cause the first moving assembly 14 to move, and the gun head assembly 42 will abut against the workpiece. According to the law of action and reaction forces of Newton's third law, the workpiece will give a thrust to the gun head assembly 42, the gun head assembly 42 will give a thrust to the second sleeve 412, and the second sleeve 412 will also give a thrust to the gun head assembly 42 under the driving of the second driving mechanism 60, so that the gun head assembly 42 and the second sleeve 412 will be greatly compressed under the mutual thrust, and this compression will cause elastic deformation between the gun head assembly 42 and the second sleeve 412. Certainly, when the second driving mechanism 60 drives the second moving assembly 15 to move and causes the gun head assembly 42 to come into contact with the workpiece, the second driving mechanism 60 may have reached the stroke. When the first driving mechanism 60 initially drives the second moving assembly 15 to move, compression may also occur between the second sleeve 412 and the gun head assembly 42, and therefore there is also an amount of compression between the second sleeve and the gun head assembly.

After the second driving mechanism 60 reaches the stroke and no longer drives the second moving assembly 15 to move, the second moving assembly 15 substantially does not move toward the second driving mechanism 60 under the resistance of the second driving mechanism 60 to the second moving assembly 15. Since the second moving assembly 15 is fixedly connected to the second sleeve 412, the second sleeve 412 substantially does not move toward the second driving mechanism 60 under the resistance of the second driving mechanism 60 to the second sleeve 412. When the driving assembly 43 of the tightening mechanism 40 drives the gun head assembly 42 to rotate to screw the screw into the workpiece, due to the amount of compression between the gun head assembly 42 and the second sleeve 412, a thrust is given to the gun head assembly 42, and the thrust pushes the gun head assembly 42 to move toward the interior of the workpiece, so that the screw is screwed into the workpiece and the workpiece is fastened.

As some examples, the tightening mechanism 40 comprises a second elastic member (the second elastic member is not shown). The second elastic member is fitted outside the gun head assembly 42, one end of the second elastic member is fixedly connected to the gun head assembly 42, and the other end of the second elastic member abuts against the second sleeve 412. The second driving mechanism 60 is configured to drive the second moving assembly 15 to move toward the first moving assembly 14, so as to cause the second sleeve 412 to move to compress the second elastic member. The second elastic member gives a thrust to the gun head assembly 42 when the driving assembly 43 is used to drive the gun head assembly 42 to rotate.

The second elastic member is fitted outside the gun head assembly 42, and when the second moving assembly 15 moves toward the first moving assembly 14, the second sleeve 412 moves relative to the gun head assembly 42; and the movement of the second sleeve 412 causes the second sleeve 412 to compress the second elastic member, so that the second elastic member is elastically deformed, and thus the second elastic member can provide a pressure for pushing the gun head assembly 42 toward the interior of the workpiece, thereby achieving the automatic screw screwing process. As an example, the second elastic member may be a spring, an elastic diaphragm, etc.

Still referring to FIGS. 3 and 4, in some implementations, the first end 11 further comprises a limiting assembly 111. The limiting assembly 111 is configured to abut against the first moving assembly 14 when the tightening mechanism 40 is used to drive the screw to rotate.

The limiting assembly 111 can reduce the risk of the first moving assembly 14 being separated from the supporting assembly 13 when moving toward the first end 11, and ensure the smooth implementation of the screw tightening process.

In the case of the elastic connection between first moving assembly 14 and the second moving assembly 15, when the second driving mechanism 60 initially drives the second moving assembly 15 to move, there is a distance between the first moving assembly 14 and the limiting assembly 111, so as to provide a moving displacement for the first moving assembly 14, so that the first moving assembly 14 can drive the first sleeve 411 to move to extend out of the regulating port 21. After the second driving mechanism 60 drives the second moving assembly 15 to move, there may still be a distance between the first moving assembly 14 and the limiting assembly 111. At this time, under the thrust of the first elastic member 17, the first moving assembly 14 is pushed to continue moving toward the limiting assembly 111, so that the first sleeve 411 further abuts against the workpiece. Since the thrust provided by the first elastic member 17 is an elastic force, and the acting force is moderate, the process of further abutment between the first sleeve 411 and the workpiece is relatively moderate, which is less likely to damage the workpiece, thereby ensuring the structural stability of the workpiece. Moreover, under the action of the elastic force, during the movement of the first sleeve 411 caused by the first moving assembly 14, due to the limiting function of the limiting assembly 111, the first moving assembly 14 is not subjected to excessive movement which causes the first sleeve 411 to excessively squeeze the workpiece, so that the structural stability of the workpiece can be further ensured. When the tightening mechanism 40 drives the screw to rotate, under the action of the elastic force, the first sleeve 411 always keeps abutting against the workpiece, which can ensure the screwing stability of the screw.

In some implementations, the limiting assembly 111 comprises a limiting body 1111 and an extension portion 1112. The limiting body 1111 is configured to abut against the first moving assembly 14. The extension portion 1112 is connected to the limiting body 1111, the extension portion 1112 protrudes relative to the limiting body 1111, and the first sleeve 411 can move in the first direction X relative to the extension portion 1112.

The limiting body 1111 abuts against the first moving assembly 14, and can limit the first moving assembly 14. The extension portion 1112 protruding from the limiting body 1111 can provide a supporting foundation for the first sleeve 411, facilitating the movement of the first sleeve 411.

In some implementations, the fixing mechanism 10 comprises a first buffer member (not shown). The first buffer member may be arranged on a surface of the limiting assembly 111 that faces the first moving assembly 14.

When the limiting assembly 111 abuts against the first moving assembly 14, the first buffer member can provide a buffering function, to buffer an acting force of the first moving assembly 14 on the limiting assembly 111, reducing the risk of damage to the first moving assembly 14 and the limiting assembly 111, and ensuring the structural stability of the two assemblies.

In some implementations, the fixing mechanism 10 comprises a second buffer member (not shown). The second buffer member is arranged on a surface of the first moving assembly 14 that faces the limiting assembly 111.

When the limiting assembly 111 abuts against the first moving assembly 14, the second buffer member can provide a buffering function, to buffer an acting force of the first moving assembly 14 on the limiting assembly 111, reducing the risk of damage to the first moving assembly 14 and the limiting assembly 111, and ensuring the structural stability of the two assemblies.

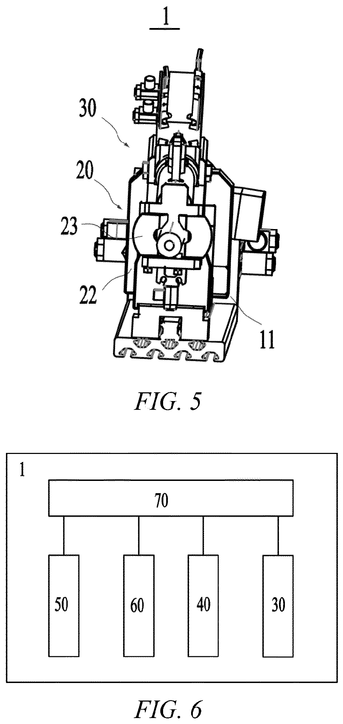

Referring to FIGS. 3 to 5, in some implementations, the regulating mechanism 20 comprises a regulating body 22 and an opening and closing portion 23. The regulating body 22 is arranged at the first end 11, and the regulating body 22 has the regulating port 21. The opening and closing portion 23 is rotatably connected to the regulating body 22 and is configured to cover at least part of the regulating port 21. When the tightening mechanism 40 moves in the first direction X, the opening and closing portion 23 rotates relative to the regulating body 22 to open the regulating port 21.

When the screw feeding mechanism 30 conveys the screw to the regulating port 21, the regulating port 21 is in a closed state, and it is possible to reduce the risk of the screw falling from the regulating port 21. When the first driving mechanism 50 drives the tightening mechanism 40 to the regulating port 21, the tightening mechanism 40 may be fixed to the screw. When the second driving mechanism 60 drives the tightening mechanism 40 to extend out of the regulating port 21, the opening and closing portion 23 rotates to open the regulating port 21, so that the first sleeve 411 of the tightening mechanism 40 can extend out smoothly.

In some implementations, the screw feeding mechanism 30 further comprises a vacuum suction assembly (not shown). The vacuum suction assembly is configured to provide a negative pressure for the regulating port 21, so as to suck and fix the screw at the regulating port 21 to the tightening mechanism 40. The vacuum suction enables the screw to maintain the same posture before screwing into the workpiece, and the posture of the screw remains stable, so that it is possible to ensure that the gun head assembly 42 of the tightening mechanism 40 stably sucks the screw, and the screw can be screwed into the workpiece perpendicular to the surface of the workpiece.

In some implementations, the second driving mechanism 60 is connected to the tightening mechanism 40. An output shaft of the second driving mechanism 60 is always kept in connection with the tightening mechanism 40. After the process of screwing the screw into the workpiece is finished, the second driving mechanism 60 may drive the second moving assembly 15 to move in a direction facing away from the first moving assembly 14, so as to restore the second moving assembly 15 and further cause the first moving assembly 14, the tightening mechanism 40, etc. to restore to prepare for the next tightening, thereby further improving the screw tightening efficiency and improving the overall production efficiency.

Referring to FIGS. 3 to 6, in some implementations, the screw tightening device 1 comprises a control mechanism 70. The control mechanism 70 is configured to control the first driving mechanism 50 to drive the tightening mechanism 40 to move in the first direction X when it is confirmed that the screw is located at the regulating port 21. The production efficiency can be further improved by means of the automatic control of the control mechanism 70. As an example, the control mechanism 70 may be a PLC assembly, etc. By providing a sensor, such as a pressure sensor, at the regulating port 21, when the pressure sensor senses that the screw is located at the regulating port 21, detected data may be transmitted to the control mechanism 70, and the control mechanism 70 performs calculation and sends an instruction to the first driving mechanism 50, to cause the first driving mechanism 50 to execute a driving action.

In some implementations, after confirming that the driving of the first driving mechanism 50 is finished, the control mechanism 70 may further control the second driving mechanism 60 to drive the tightening mechanism 40 to move in the first direction X. The production efficiency can be further improved by means of the automatic control of the control mechanism 70.

In some implementations, after confirming that the driving of the second driving mechanism 60 is finished, the control mechanism 70 may further control the tightening mechanism 40 to drive the screw to screw into the workpiece. The production efficiency can be further improved by means of the automatic control of the control mechanism 70.

In some implementations, after confirming that the driving of the tightening mechanism 40 is finished, the control mechanism 70 may further control the second driving mechanism 60 to pull back the tightening mechanism 40 to restore the tightening mechanism 40.

In some implementations, after confirming that the tightening mechanism 40 is restored, the control mechanism 70 may further drive the screw feeding mechanism 30 to continue to feed a screw, to start a new round of screw screwing operations.

Referring to FIGS. 1 to 4, as a specific embodiment of the present application, the screw tightening device 1 comprises a fixing mechanism 10, a regulating mechanism 20, a screw feeding mechanism 30, a tightening mechanism 40, a first driving mechanism 50, and a second driving mechanism 60. The fixing mechanism 10 extends in a first direction X, and the fixing mechanism 10 comprises a first end 11 and a second end 12 arranged opposite to each other in the first direction X. The regulating mechanism 20 is arranged at the first end 11, and the regulating mechanism 20 comprises a regulating port 21. The screw feeding mechanism 30 is arranged at the regulating mechanism 20 and is configured to convey a screw L to the regulating port 21. The tightening mechanism 40 is arranged at the fixing mechanism 10, and the tightening mechanism 40 is configured to drive the screw L to rotate. The first driving mechanism 50 is arranged at the second end 12, and is configured to be drivingly connected to the tightening mechanism 40 and to drive the tightening mechanism 40 to move in the first direction X to the regulating port 21, such that the screw L is fixedly arranged at the tightening mechanism 40. The second driving mechanism 60 is arranged at the second end 12, and is configured to be drivingly connected to the tightening mechanism 40 and to drive the tightening mechanism 40 to move in the first direction X to extend out of the regulating port 21. The fixing mechanism 10 comprises a supporting assembly 13, a first moving assembly 14, and a second moving assembly 15. The second moving assembly 15 and the first moving assembly 14 are sequentially arranged in the first direction X; the second moving assembly 15 is located between the first moving assembly 14 and the second end 12; and the second moving assembly 15 is movably connected to the supporting assembly 13 and is fixedly connected to the second sleeve 412. The first moving assembly 14 and the second moving assembly 15 are elastically connected to each other.

The first driving mechanism 50 is configured to be drivingly connected to the second moving assembly 15 and to drive the second moving assembly 15 to move relative to the supporting assembly 13 in the first direction X, so as to cause the first sleeve 411 to move to the regulating port 21. The second driving mechanism 60 is configured to be drivingly connected to the second moving assembly 15 and to drive the second moving assembly 15 to move relative to the supporting assembly 13 in the first direction X, so as to cause the first sleeve 411 to move to extend out of the regulating port 21. Moreover, due to the elastic connection between the first moving assembly 14 and the second moving assembly 15, and due to the amount of compression between the first moving assembly 14 and the second moving assembly 15, a thrust is given to the first moving assembly 14, and the thrust is transmitted to the first sleeve 411, so that it is possible to ensure that surfaces of the first sleeve 411 and the workpiece are always kept in contact with each other, giving an auxiliary supporting force to the first sleeve 411, reducing the risk of the screw L falling off due to the separation of the first sleeve 411 from the workpiece, and ensuring the smooth screwing of the screw L. Moreover, since the first driving mechanism 50 and the second driving mechanism 60 drive the tightening mechanism 40 to move, the production efficiency can be further improved.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A screw tightening device, comprising:
a fixing mechanism extending in a first direction, the fixing mechanism comprising a first end and a second end arranged opposite to each other in the first direction;
a regulating mechanism arranged at the first end, the regulating mechanism comprising a regulating port;
a screw feeding mechanism arranged at the regulating mechanism and configured to convey a screw to the regulating port;
a tightening mechanism arranged at the fixing mechanism, the tightening mechanism being configured to drive the screw to rotate;
a first driving mechanism arranged at the second end, and configured to be drivingly connected to the tightening mechanism and to drive the tightening mechanism to move in the first direction to the regulating port, such that the screw is fixedly arranged at the tightening mechanism; and
a second driving mechanism arranged at the second end, and configured to be drivingly connected to the tightening mechanism and to drive the tightening mechanism to move in the first direction to extend out of the regulating port.

2. The screw tightening device according to claim 1, wherein the tightening mechanism comprises:
a sleeve assembly;
a gun head assembly arranged in the sleeve assembly and capable of moving in the first direction relative to the sleeve assembly, the gun head assembly being configured to be fixedly connected to the screw; and
a driving assembly arranged on the sleeve assembly, the driving assembly being drivingly connected to the gun head assembly and configured to drive the gun head assembly to rotate so as to cause the screw to rotate,
wherein the first driving mechanism is configured to be drivingly connected to the sleeve assembly, so as to drive the sleeve assembly to cause the gun head assembly to move to the regulating port in the first direction; and
the second driving mechanism is configured to be drivingly connected to the sleeve assembly, so as to drive the sleeve assembly to cause the gun head assembly to move in the first direction to extend out of the regulating port.

3. The screw tightening device according to claim 2, wherein
the sleeve assembly comprises a first sleeve and a second sleeve that are sequentially arranged in the first direction, the first sleeve is capable of penetrating the regulating mechanism, and the driving assembly is arranged on the second sleeve,
wherein the gun head assembly is fitted inside the first sleeve and the second sleeve and is connected to the first sleeve and the second sleeve;
the first driving mechanism is configured to be connected to the second sleeve and to drive the second sleeve to move, so as to cause the gun head assembly and the first sleeve to move to the regulating port; and
the second driving mechanism is configured to be connected to the second sleeve and to drive the second sleeve to move, so as to cause the gun head assembly and the first sleeve to move to extend out of the regulating port.

4. The screw tightening device according to claim 3, wherein the fixing mechanism comprises:
a supporting assembly having the first end and the second end;
a first moving assembly movably connected to the supporting assembly, the first moving assembly being fixedly connected to the first sleeve and located between the first end and the second end; and
a second moving assembly connected to the first moving assembly, wherein the second moving assembly and the first moving assembly are sequentially arranged in the first direction; the second moving assembly is located between the first moving assembly and the second end; and the second moving assembly is movably connected to the supporting assembly and is fixedly connected to the second sleeve,
wherein the first driving mechanism is configured to be drivingly connected to the second moving assembly and to drive the second moving assembly to move relative to the supporting assembly in the first direction, so as to cause the first sleeve to move to the regulating port, and
the second driving mechanism is configured to be drivingly connected to the second moving assembly and to drive the second moving assembly to move relative to the supporting assembly in the first direction, so as to cause the first sleeve to move to extend out of the regulating port.

5. The screw tightening device according to claim 4, wherein the supporting assembly comprises a guide rail extending in the first direction, and the first moving assembly and the second moving assembly are both movably connected to the guide rail.

6. The screw tightening device according to claim 4 or 5, wherein the first moving assembly and the second moving assembly are elastically connected to each other.

7. The screw tightening device according to claim 6, wherein the fixing mechanism comprises:
a connecting member, wherein one end of the connecting member is fixedly connected to the first moving assembly, and the other end of the connecting member is connected to the second moving assembly and is capable of moving in the first direction relative to the second moving assembly; and
a first elastic member, wherein the first elastic member is fitted outside the connecting member, one end of the first elastic member is connected to one of the connecting member and the first moving assembly, and the other end of the first elastic member is connected to the second moving assembly,
wherein the second driving mechanism is configured to drive the second moving assembly to move toward the first moving assembly, so as to compress the first elastic member.

8. The screw tightening device according to any one of claims 4 to 7, wherein
the gun head assembly and the second sleeve are elastically connected to each other.

9. The screw tightening device according to claim 8, wherein the tightening mechanism comprises a second elastic member, wherein the second elastic member is fitted outside the gun head assembly, one end of the second elastic member is fixedly connected to the gun head assembly, and the other end of the second elastic member abuts against the second sleeve,
wherein the second driving mechanism is configured to drive the second moving assembly to move toward the first moving assembly, so as to cause the second sleeve to move to compress the second elastic member; and
the second elastic member gives a thrust to the gun head assembly when the driving assembly is used to drive the gun head assembly to rotate.

10. The screw tightening device according to any one of claims 4 to 9, wherein the first end further comprises a limiting assembly, wherein the limiting assembly is configured to abut against the first moving assembly when the tightening mechanism is used to drive the screw to rotate.

11. The screw tightening device according to claim 10, wherein the limiting assembly comprises:
a limiting body configured to abut against the first moving assembly; and
an extension portion connected to the limiting body and protruding relative to the limiting body, wherein the first sleeve is capable of moving in the first direction relative to the extension portion.

12. The screw tightening device according to claim 10 or 11, wherein
the fixing mechanism comprises a first buffer member, wherein the first buffer member is arranged on a surface of the limiting assembly that faces the first moving assembly; and/or
the fixing mechanism comprises a second buffer member, wherein the second buffer member is arranged on a surface of the first moving assembly that faces the limiting assembly.

13. The screw tightening device according to any one of claims 1 to 12, wherein the regulating mechanism comprises:
a regulating body arranged at the first end, the regulating body having the regulating port; and
an opening and closing portion rotatably connected to the regulating body and configured to cover at least part of the regulating port,
wherein when the tightening mechanism moves in the first direction, the opening and closing portion rotates relative to the regulating body to open the regulating port.

14. The screw tightening device according to any one of claims 1 to 13, wherein the screw feeding mechanism further comprises a vacuum suction assembly, wherein the vacuum suction assembly is configured to provide a negative pressure for the regulating port, so as to suck and fix the screw at the regulating port to the tightening mechanism.

15. The screw tightening device according to any one of claims 1 to 14, wherein the screw tightening device comprises a control mechanism, wherein the control mechanism is configured to control the first driving mechanism to drive the tightening mechanism to move in the first direction when it is confirmed that the screw is located at the regulating port.
